# EUROPÄISCHE PATENTANMELDUNG

(11) **EP 2 865 587 A1**
(43) Veröffentlichungstag der Anmeldung: **29.04.2015**
(21) Anmeldenummer: 14188430.4
(22) Anmeldetag: 10.10.2014
(51) Int. Cl.: B62J 7/08, B62J 11/00, B62J 9/00

(54) **Gepäckträgeradapter**

(30) Priorität: 23.10.2013 DE 102013111686
(71) Anmelder: Pletscher AG, 8460 Marthalen (CH)
(72) Erfinder: Weissenberger, Daniel, 8460 Marthalen (CH)
(74) Vertreter: Kalkoff & Partner

(57) **Zusammenfassung**

Die Erfindung betrifft einen Fahrradadapter (1) zum Ankoppeln eines Fahrradzubehörteils an einen Fahrradgepäckträger. Um einen besonders bedienerfreundlichen Fahrradadapter bereitzustellen ist vorgesehen, dass eine Positioniervorrichtung (3) eine Bewegung des Fahrradadapters (1) in eine Längsachsenrichtung verhindert und eine Riegeleinheit (6), die in Längsachsenrichtung zwischen einer Freigabeposition und einer Verriegelungsposition bewegbar ist, eine Bewegung des am Fahrradgepäckträger montierten Fahrradadapters (1) senkrecht zur Längsachsenrichtung verhindert.

## Beschreibung

Die Erfindung betrifft einen Fahrradadapter zum Ankoppeln eines Fahrradzubehörteils an einen Fahrradgepäckträger.

Fahrradadapter erleichtern das Aufsetzen und Anbringen von Zubehörteilen wie bspw. Fahrradkörben oder Fahrradtaschen auf dem Fahrradgepäckträger. Zudem ermöglichen sie eine besonders sichere Verbindung der Fahrradzubehörteile mit dem Gepäckträger, so dass ein Verrutschen oder Abfallen während der Fahrt verhindert werden kann.

Es sind Fahrradadapter mit Einsteckbolzen bekannt, bei denen die Einsteckbolzen an Bolzenaufnahmen an einem speziellen Gepäckträger eingesteckt und durch einen verstellbaren Riegel am Fahrradgepäckträger gesichert werden.

Auch ist ein Verbindungssystem bekannt, bei dem der Fahrradadapter auf den Gepäckträger aufgesetzt und über eine horizontale Schiebebewegung in eine Fixierungsvorrichtung eingeschoben wird, die eine Bewegung des Fahrradadapters senkrecht und quer zur Längsrichtung des Fahrradadapters verhindert. Zum Sichern des Fahrradadapters in Längsachsenrichtung ist eine weitere Rasteinheit vorgesehen, die nach dem Verschieben betätigt werden muss.

Der Erfindung liegt somit die Aufgabe zugrunde, einen besonders bedienerfreundlichen Fahrradadapter zum Befestigen von Fahrradzubehörteilen an einem Fahrradgepäckträger bereitzustellen.

Die Aufgabe wird gelöst durch einen Fahrradadapter mit den Merkmalen des Anspruchs 1.

Erfindungsgemäß weist ein Fahrradadapter zum Koppeln eines Fahrradzubehörteils an einem Fahrradgepäckträger
- eine an dem Fahrradzubehörteil anordbare Aufnahmeeinheit,
- eine an der Aufnahmeeinheit angeordnete Positioniervorrichtung, die im montierten Zustand eine Bewegung des Fahrradadapters in eine Längsachsenrichtung verhindert,
- und eine an der Aufnahmeeinheit angeordneter Riegeleinheit auf, die in Längsachsenrichtung zwischen einer Freigabeposition und einer Verriegelungsposition bewegbar ist, wobei sie in der Verriegelungsposition eine Bewegung des am Fahrradgepäckträger montierten Fahrradadapters senkrecht zur Längsachsenrichtung verhindert.

Durch die Anordnung der Positioniervorrichtung, die bei einem auf einen Fahrradgepäckträger aufgesetzten Fahrradadapter eine Bewegung in Längsachsenrichtung des Fahrradadapters verhindert, kombiniert mit der Riegeleinheit, die ebenfalls in Längsachsenrichtung bewegbar ist, jedoch eine Verriegelung des Fahrradadapters am Fahrradgepäckträger senkrecht zur Längsachsenrichtung bewirkt, kann der Fahrradadapter zum einen senkrecht auf die Tragfläche des Fahrradgepäckträgers aufgesetzt und zum anderen gleichzeitig mit dem Aufsetzen an dem Fahrradgepäckträger sowohl in Fahrtrichtung unbeweglich positioniert, als auch vor einem Abheben (Demontieren) vom Gepäckträger senkrecht zur Längsachsenrichtung fixiert werden. Die Verriegelung durch die Riegeleinheit kann somit mit den Aufsetzen selbstständig/automatisch erfolgen.

Unter dem Koppeln ist somit insbesondere eine Positionierung des Fahrradadapters in Längsachsenrichtung und eine Fixierung des Fahrradadapters senkrecht zur Längsachsenrichtung zu verstehen.

Die Längsachsenrichtung des Fahrradadapters entspricht der Längsachsenrichtung des Fahrradgepäckträgers und wird als x-Achsen-Richtung verstanden. Dabei kann die x-Achsen-Richtung der Fahrtrichtung des Fahrrads entsprechen. Unter einer Richtung quer zur Längsachsenrichtung wird die y-Achsen-Richtung verstanden, die mit der x-Achsen-Richtung eine gemeinsame Ebene aufspannt, in der die Aufnahmeeinheit liegt. D. h., die x-y-Ebene ist im montierten Zustand des Fahrradadapters bspw. parallel zur Trägerfläche des Gepäckträgers angeordnet. Unter der senkrecht zur Längsachse verlaufenden Richtung wir die z-Achsenrichtung verstanden, die senkrecht auf der x-y-Ebene steht. D. h., die Riegeleinheit ist in x-Richtung bewegbar und versperrt eine Bewegung des Fahrradadapters in z-Richtung.

Unter gleichzeitig wird verstanden, dass der Fahrradadapter mit seinem Aufsetzen auf den Gepäckträger sowohl in x-Richtung als auch in z-Richtung verriegelt, insbesondere spielfrei fixiert wird, ohne dass zum Verriegeln eine weitere Bewegung, bspw. eine Schiebebewegung des Fahrradadapters durchgeführt werden muss.

Dabei ist die Riegeleinheit auf einen Gepäckträger abgestimmt und derart am Fahrradadapter angeordnet und ausgebildet, dass sie in ihrer Verriegelungsposition an einer zur Riegeleinheit korrespondierend ausgebildeten Verriegelungseinheit am Fahrradgepäckträger eingreift. Die Verriegelungsvorrichtung kann dabei bspw. eine Kante, Strebe, insbesondere Querstrebe des Fahrradgepäckträgers sein.

Unter einer Aufnahmeeinheit wird dabei ein Tragelement verstanden, das bspw. plattenförmig ausgebildet sein kann. Auch kann es als Rahmen ausgebildet sein, an dem die Positioniervorrichtung und die Riegeleinheit angeordnet sind.

Bei der Ausführung als Rahmen kann dieser bspw. Verstrebungen aufweisen, die eine Torsionssteifigkeit der Aufnahmeeinheit gewährleisten. Auch kann die Aufnahmeeinheit bspw. direkt an einem Fahrradzubehörteil angeordnete sein, so dass die Positioniervorrichtung und auch die Riegeleinheit direkt an dem Fahrradzubehörteil montiert sind.

Unter Fahrradzubehörteilen sind alle auf einen Fahrradgepäckträger aufzubringenden Zubehörteile wie bspw. Fahrradkörbe oder Fahrradtaschen, zu verstehen.

Nach einer Weiterbildung der Erfindung weist die Riegeleinheit eine Riegelaufnahme mit einem zwischen der Verriegelungsposition und der Freigabeposition bewegbaren Riegel auf.

Die Riegelaufnahme kann hierfür insbesondere als Riegelgehäuse oder Riegelrahmen, bspw. auch dreiseitiger Riegelrahmen ausgebildet sein, indem der Riegel verschiebbar angeordnet ist.

Die Riegeleinheit kann an einer Unterseite der Aufnahmeeinheit, d. h. an der Seite der Aufnahmeeinheit, die in der montierten Position des Fahrradadapters zur Tragfläche des Gepäckträgers zeigt, angeordnet sein.

Die Positionierung der Riegeleinheit an der Aufnahmeeinheit kann dabei auf den zu verwendenden Fahrradgepäckträger abgestimmt sein. So ist es bspw. möglich die Riegeleinheit in einer zentralen Position an der Aufnahmeeinheit anzuordnen, wodurch eine besonders sichere Verriegelung in z-Achsenrichtung erreicht werden kann. Auch kann die Riegeleinheit an einem stirnseitigen Ende der Aufnahmeeinheit angeordnet sein.

Um die gleichzeitige Ankopplung und Verriegelung besonders einfach zu ermöglichen, weist die Riegeleinheit besonders bevorzugt eine Feder auf, die derart angeordnet ist, dass der Riegel gegen eine Federkraft zwischen der Freigabe und Verriegelungsposition bewegbar ist.

Die Feder kann dabei derart angeordnet sein, dass eine Zugkraft auf den Riegel wirkt. Die Feder kann daher als Zugfeder ausgebildet und derart angeordnet sein, dass der Riegel von der Verriegelungsposition in die Freigabeposition gegen die wirkende Zugkraft der Feder bewegt wird.

Insbesondere ist die Feder jedoch als Druckfeder ausgebildet und derart angeordnet, dass der Riegel gegen die Druckkraft der Feder von der Verriegelungsposition in die Freigabeposition bewegbar ist.

Der Riegel und die Feder können derart ausgebildet und angeordnet sein, dass während des Aufsetzens des Fahrradadapters auf die Trägerfläche des Gepäckträgers der Riegel von seiner Verriegelungsposition in die Freigabeposition bewegt wird. Sobald der Adapter eine bestimmte Position einnimmt, greift (bspw. durch ein Zurückschnappen) der Riegel aufgrund der Federkraft in seine Verriegelungsposition und verriegelt den Fahrradadapter an einer zum Riegel korrespondierend ausgebildeten Verriegelungsvorrichtung am Fahrradgepäckträger.

Das Eingreifen kann bspw. erfolgen, sobald der Riegel unterhalb einer als Verriegelungsvorrichtung ausgebildeten Strebe des Fahrradgepäckträgers ist oder bspw. auch sobald der Fahrradadapter seine Endposition am Gepäckträger eingenommen hat.

Die Feder bewirkt somit ein besonders einfaches und automatisches Verriegeln beim Anordnen des Fahrradadapters am Fahrradgepäckträger.

Zum Endriegeln und zur Entnahme des Fahrradadapters kann bei dem montierten Fahrradadapter der Riegel gegen die Federkraft von der Verriegelungsposition in die Freigabeposition gedrückt werden, der Fahrradadapter kann senkrecht entnommen werden und der Riegel springt aufgrund der Federkraft zurück in seine Verriegelungsposition.

Nach einer Weiterbildung der Erfindung weist die Positioniervorrichtung mindestens zwei Positionierelemente auf, die insbesondere in Längsachsenrichtung (x-Achsen-Richtung) des Fahrradadapters beabstandet zueinander angeordnet sind.

Die Positionierelemente sind dabei bspw. als aus einer Ebene (x-y-Ebene) der Aufnahmeeinheit herausragende flächige oder stiftförmige Bauteile ausgebildet. D. h., die Positionierelemente können als sich aus der Unterseite der Aufnahmeeinheit erstreckende Erhebungen ausgebildet sein.

Die Positionierelemente können einstückig mit der Aufnahmeeinheit oder auch als separate Bauteile, die an der Aufnahmeeinheit angeordnet sind ausgebildet sein.

Der Abstand zwischen den Positionierelementen ist vorzugsweise auf den Fahrradgepäckträger ausgerichtet und insbesondere derart ausgebildet, dass jedes Positionierelement im montierten Zustand des Fahrradadapters an einem Bauteil des Fahrradgepäckträgers, das als Verriegelungsvorrichtung ausgebildet ist, eingreift, wodurch eine spielfreie Lagerung des Fahrradadapters in x-Achsen-Richtung am Fahrradgepäckträger ermöglicht wird.

Dabei kann der Abstand der Positionierelemente fest vorgegeben sein, so dass der Fahrradadapter nur auf spezielle Fahrradgepäckträger, die einen auf den Abstand der Positionierelemente ausgerichteten Abstand von mindestens zwei Bauteilen aufweisen, ausgerichtet sein.

Um den Fahrradadapter besonders individuell und insbesondere auch für eine Vielzahl von unterschiedlichen Fahrradgepäckträgern einsetzen zu können, kann mindestens ein Positionierelement verstellbar in Längsachsenrichtung an der Aufnahmeeinheit angeordnet sein. Dafür kann bspw. eine Verstellschiene an der Aufnahmeeinheit angeordnet sein, in der das Positionierelement in Längsachsenrichtung verschiebbar gelagert ist.

Die Positionierelemente sind somit dazu ausgebildet und derart angeordnet, dass sie im montierten Zustand des Fahrradadapters in x-Achsenrichtung bspw. jeweils mit einer Außenseite an ein Bauteil des Fahrradgepäckträgers angreifen, d. h. mindestens in Kontakt kommen und zwischen zwei Bauteilen, bspw. zwei Streben (Querstreben) des Fahrradgepäckträgers angeordnete sind. Alternativ ist es bspw. auch möglich, die Positionierelemente derart zu beabstanden, dass zwei Bauteile des Fahrradgepäckträgers an den Innenseiten der Positionierelemente anliegen.

Nach einer Weiterbildung der Erfindung weist die Aufnahmeeinheit eine zum Eingriff mit dem Gepäckträger ausgebildete Fixiervorrichtung auf, die derart ausgebildet und angeordnet ist, dass eine sich in Eingriff befindliche Fixiervorrichtung eine Bewegung des Fahrradadapters am Fahrradgepäckträger quer zur Längsachsenrichtung (y-Achsenrichtung) des Fahrradadapters zumindest weitestgehend verhindert. Dabei ermöglicht die Fixiervorrichtung beim Aufsetzen zusätzlich zur gleichzeitigen festen Positionierung in Längsachsenrichtung (x-Achsenrichtung) und Fixierung senkrecht zur Längsachse (z-Achsenrichtung) eine weitere gleichzeitige Fixierung quer zur Längsachsenrichtung (y-Achsenrichtung). Die Fixierung des Fahrradadapters in alle drei Achsrichtungen erfolgt somit beim Aufsetzen gleichzeitig und insbesondere automatisch mit dem Aufsetzen.

Besonders bevorzugt weist die Fixiervorrichtung mindestens zwei, insbesondere vier oder mehr Fixierelemente auf. Die Fixierelemente können in y-Achsenrichtung zueinander beabstandet angeordnet und bspw. entsprechend den Positionierelementen als aus der Ebene der Aufnahmeeinheit (x-y-Ebene) herausragende stiftförmige und/oder flächenförmige Erhebungen ausgebildet sein. D. h., die Fixierelemente können sich entsprechend den Positionierelementen von der Unterseite der Aufnahmeeinheit weg erstrecken. Auch können die Fixierelemente in den Eckbereichen der Aufnahmeeinheit angeordnet sein.

Der Abstand der Fixierelemente zueinander ist auf den Fahrradgepäckträger angepasst, so dass jedes sich in Eingriff mit dem Fahrradgepäckträger befindliches Fixierelement mit einer Innenseite an einer Außenseite des Fahrradgepäckträgers in Kontakt ist. Alternativ können die Fixierelemente auch derart angeordnet und ausgebildet sein, dass jedes in Eingriff befindliche Fixierelement mit einer Außenseite an eine Innenseite des Gepäckträgers angrenzt. Hierüber wird eine Bewegung in y-Richtung des montierten Fahrradadapters am Fahrradgepäckträger verhindert. Dabei sind unter Innenseiten die jeweils zueinander zeigenden Bereiche und unter den Außenseiten die jeweils voneinander weg zeigenden Bereiche der Fixierelemente/Gepäckträgerbaueteile zu verstehen.

Die Anordnung der Riegeleinheit kann an unterschiedlichen Positionen an der Aufnahmeeinheit erfolgen. So kann die Riegeleinheit bspw. kopfseitig, d. h. in x-Achsenrichtung an einem Ende der Aufnahmeeinheit angeordnet sein, so dass der Riegel bspw. mit der Hand erreichbar ist. Für eine besonders sichere Fixierung des Fahrradadapters am Gepäckträger ist die Riegeleinheit jedoch weitestgehend mittig in x-Achsen-Richtung an der Aufnahmeeinheit angeordnet. Um den Riegel von Hand besonders einfach bedienen zu können, ist nach einer Weiterbildung der Erfindung am Riegel ein Riegelstab angeordnet.

Der Riegelstab erstreckt sich in x-Achsen-Richtung, ist an einem ersten Ende mit dem Riegelschieber verbunden und weist an seinem zweiten Ende bspw. einen Griff auf. Der Riegelstab kann sich dabei über die Außenkante der Aufnahmeeinheit hinaus erstrecken, bspw. auch über die Außenkante eines Fahrradzubehörteils, das mit dem Fahrradadapter verbunden ist. Hierdurch kann der Riegelstab mit Riegel besonders einfach von Hand bedient werden. Der Riegelstab kann abhängig von der Ausführung der Feder als Druckstab oder Zugstab ausgebildet sein.

Um insbesondere bei besonders langen Riegelstäben eine sichere Führung zu gewährleisten, weist die Riegeleinheit ein Führungselement auf. Dieses kann mit der Unterseite der Aufnahmeeinheit verbunden und derart angeordnet und ausgebildet sein, dass der Riegelstab in ihm bewegbar gelagert ist. Vorzugsweise ist das Führungselement als Clip mit einer Rast- und Klemmverbindung ausgebildet, über die das Führungselement an dem Aufnahmeelement lösbar angeordnet ist. Auch kann das Führungselement als Positionierkörper für den Riegel, der die Bewegung des Riegels begrenzt, ausgebildet sein.

Um den Riegelstab insbesondere auch vor Verschmutzung zu schützen, kann das Führungselement bspw. auch als Abdeckung, bspw. als schalenförmige Abdeckung des Riegelstabs an der Unterseite der Aufnahmeeinheit ausgebildet sein.

Nach einer Weiterbildung der Erfindung kann die Riegeleinheit zumindest teilweise als Positioniervorrichtung und/oder Fixiervorrichtung ausgebildet sein. Dabei kann bspw. eine Kante der Riegeleinheit als Positionierelement ausgebildet sein. D. h., die Kante der Riegeleinheit ist derart an der Aufnahmeeinheit angeordnet, dass sie im montierten Zustand zusammen mit mindestens einem weiteren Positionierelement eine spielfreie Positionierung des Fahrradadapters in x-Achsenrichtung bewirkt. Die Kante der Riegeleinheit ist somit entsprechend den obigen Ausführungen zu einem weiteren Positionierelement beabstandet angeordnet.

Alternativ oder ergänzend kann die Riegeleinheit auch als Fixiervorrichtung ausgebildet sein. Hierfür kann die Riegeleinheit bspw. besonders breit ausgebildet sein, so dass es im montierten Zustand des Fahrradadapters an zwei gegenüberliegend angeordneten Bauteilen, bspw. zwei Längsstreben des Fahrradgepäckträgers angrenzt, wodurch eine Bewegung des montierten Fahrradadapters in y-Richtung verhindert wird und der Fahrradadapter spielfrei gelagert ist.

Im Weiteren wird die Erfindung anhand von Ausführungsbeispielen näher erläutert. Es zeigt:
- Fig. 1: schematisch in einer perspektivischen Darstellung eine Unterseite eines Fahrradadapters mit jeweils vier Positionier- und Fixierelementen und einer Rasteinheit;
- Fig. 2: schematisch in einer perspektivischen Darstellung eine weitere Ausführungsform des Fahrradadapters mit einer als Positionierelement ausgebildeten Rasteinheit.

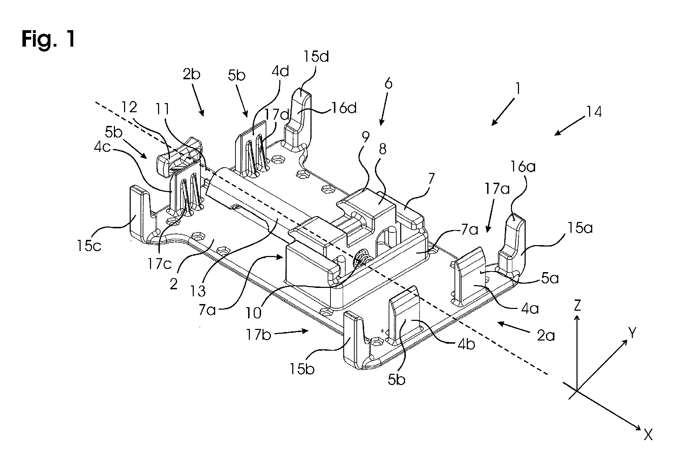

Figur 1 zeigt in perspektivischer Darstellung eine erste Ausführungsform eines Fahrradadapters 1 mit einer plattenförmig ausgebildeten Aufnahmeeinheit 2. Die Aufnahmeeinheit 2 weist eine weitestgehend rechtwinklige Grundform auf und ist von der Unterseite dargestellt. An der Unterseite ist eine Positioniervorrichtung 3 angeordnet. Die Positioniervorrichtung 3 besteht aus einzelnen sich jeweils aus der Unterseite erstreckenden Positionierelementen 4a-4b, die als plattenförmige Vorsprünge in einem Winkel von ca. 90° zur Unterseite ausgebildet sind. Die Positionierelemente 4a-4d sind einstückig mit der Aufnahmeeinheit 2 ausgebildet. Um die Biegesteifigkeit der Positionierelemente, insbesondere in x-Achsenrichtung zu verstärken, sind Stützen 17a-17d an den Positionierelementen angeordnet.

Jeweils im Bereich der Stirnseiten 2a, 2b des Aufnahmeelementes 2 sind zwei Positionierelemente 4a-4b nebeneinander angeordnet. Der Abstand zwischen den Außenflächen 5a-5d, der sich dabei in x-Achsenrichtung gegenüberstehenden Positionierelementen 4a-4d ist auf einen Gepäckträger (hier nicht dargestellt) derart angepasst, dass die Außenflächen 5a-5d im montierten Zustand (Fahrradadapter ist am Gepäckträger angeordnet und verriegelt) in Kontakt mit Bauteilen des Fahrradgepäckträgers sind. D. h., der Fahrradadapter ist über den Kontakt der Außenflächen 5a-5d an dem Gepäckträger in x-Achsenrichtung spielfrei gelagert. Um ein senkrechtes Aufsetzen der Positionierelemente 4a-4d besonders einfach zu ermöglichen, ist das freie Ende der Positionierelemente 4a-4d abgeschrägt.

Alternativ und um bspw. eine verbesserte Verriegelung des Fahrradadapters 1 in z-Achsenrichtung zu ermöglichen, können bspw. die freien Enden der Positionierelemente 4a-4d an einer Stirnseite 2a, 2 der Aufnahmeeinheit 2 eine Rastnase zum Hintergreifen an einem Bauteil des Gepäckträgers aufweisen. Eine derartige Ausführungsform des Fahrradadapters kann ebenfalls besonders einfach, jedoch über eine Schwenkbewegung am Fahrradgepäckträger montiert werden.

Im Bereich zwischen den Kopfseiten 2a, 2b ist zusätzlich eine Riegeleinheit 6 angeordnet. Die Riegeleinheit 6 weist eine Riegelaufnahme 7 auf, in der ein Riegel 8 zwischen einer Freigabe- und einer Verriegelungsposition bewegbar angeordnet ist. Der Riegel 8 ist in seiner Verriegelungsposition dargestellt, so dass ein freies Ende 9 des Riegels 8 über eine Außenkante 7a der Riegelaufnahme 7 hinausragt. Der Riegel 8 ist an einer Längsseite 7b der Riegelaufnahme 7 mittels einer Druckfeder 10 gelagert.

Um eine besonders einfache Bedienung der Riegeleinheit 6 zu ermöglichen, weist diese im Weiteren einen Riegelstab 11 mit einem Druckknopf 12 auf. Der Riegel 8 kann über einen auf den Druckknopf 12 und den Riegelstab 11 wirkenden Pressdruck in Längsachsenrichtung des Riegelstabs 11 gegen die Kraft der Feder 10 in die Riegelaufnahme 7 eingeschoben werden, so dass die freien Enden 9 mit der Außenkante 7a der Riegelaufnahme 7 zumindest bündig sind oder ggf. gegenüber dieser in die Riegelaufnahme 7 zurückspringen. Ein derart eingeschobener Riegel 8 befindet sich in seiner Freigabeposition (hier nicht dargestellt).

Zur besseren Führung des Riegelstabes 11 ist ein Führungselement 13 an der Unterseite der Aufnahmeeinheit 2 angeordnet, indem der Riegelstab 11 bei einer Bewegung entlang gleitet. Das Führungselement 13 ist lösbar an der Aufnahmeeinheit 2 angeordnet und weist eine Rastvorrichtung (hier nicht dargestellt) auf.

Im Weiteren ist die Riegeleinheit 6 derart an der Aufnahmeeinheit 2 positioniert und angeordnet, dass die freien Enden 9 in der Verriegelungsposition des Riegels 7 an einer an dem Fahrradgepäckträger angeordneten und zum Riegel korrespondierenden Verriegelungsvorrichtung angeordnet sind, wodurch im montierten Zustand (der Riegel ist mit der Verriegelungsvorrichtung in Eingriff) der in der Verriegelungsposition befindliche Riegel 7 eine Bewegung des Fahrradadapters 1 am Fahrradgepäckträger in z-Richtung blockiert.

Über die Positioniervorrichtung 4a - 4d erfolgt somit eine Positionierung des auf den Fahrradgepäckträger aufgesetzten Fahrradadapters 1 in x-Richtung, während über die Riegeleinheit 6 eine Fixierung des auf den Fahrradgepäckträger aufgesetzten Fahrradadapters in z-Richtung erfolgt.

Um den auf den Fahrradgepäckträger aufgesetzten Fahrradadapter auch in y-Richtung sicher am Gepäckträger zu fixieren, weist die Aufnahmeeinheit 2 zusätzlich eine Fixiervorrichtung 14 auf, die eine Bewegung des auf den Fahrradgepäckträger aufgesetzten Fahrradadapters in y-Richtung verhindert.

Die Fixiervorrichtung 14 weist hierfür vier Fixierelemente 15a - 15d auf, die jeweils im Bereich der Ecken der Aufnahmeeinheit 2 angeordnet sind. Die Fixierelemente 15a-15d erstrecken sich entsprechend den Positionierelementen 4a-4d weitestgehend senkrecht aus der Aufnahmeeinheit 2 heraus, d. h., sie sind als sich in z-Richtung aus der Aufnahmeeinheit erstreckende Vorsprünge ausgebildet. Die Fixierelemente 15a-15d sind ebenfalls einstückig mit der Aufnahmeeinheit 2 ausgebildet.

Der Abstand zwischen den Innenflächen 16a-16d von jeweils zwei sich um die x-Achse gegenüberstehenden Fixierelementen 15a-15d ist derart auf den Fahrradgepäckträger abgestimmt, dass im montierten Zustand die Innenflächen 16a-16d mit Bauteilen des Fahrradgepäckträgers in Kontakt sind, wodurch zusätzlich auch eine spielfreie Lagerung des Fahrradadapters 1 am Fahrradgepäckträger in x-Achsenrichtung ermöglicht wird.

Alternativ können die Fixierelemente 15a - 15d bspw. auch derart angeordnet sein, dass sie mit ihrer Außenseite an dem Gepäckträger eingreifen.

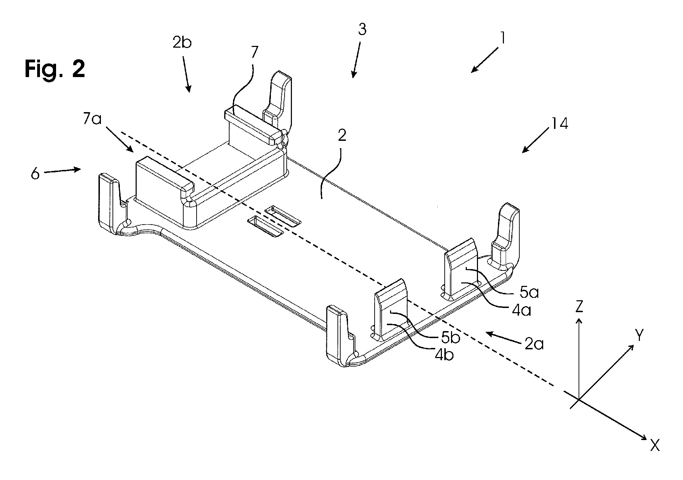

Figur 2 zeigt schematisch und in perspektivischer Ansicht die Aufnahmeeinheit 2 und die an ihr angeordnete Fixierungsvorrichtung 14 aus Figur 1. Die Positioniervorrichtung 3 besteht aus zwei an einer ersten Stirnseite 2a der Aufnahmeeinheit nebeneinander angeordneten Positionierelementen 4a, 4b. An der der ersten Stirnseite 2a gegenüberliegenden zweiten Stirnseite 2b ist die Riegeleinheit 6 mit der Riegelaufnahme 7 angeordnet. Dabei ist die Riegelaufnahme 7 mit ihrer Außenkante 7a derart positioniert, dass der Abstand der Außenkante 7a zu den Außenseiten 5a, 5b der Positionierelemente 4a, 4b dem Abstand der sich gegenüberstehenden Positionierelementen 4a-4d aus Figur 1 entspricht. Die Riegelaufnahme 7 ist somit als Teil der Positioniereinheit 3 ausgebildet. Im Weiteren kann die Riegeleinheit 6, der Druckstab 11, das Führungselement 13 und alle weiteren in Figur 1 beschriebenen Bauteile des Fahrradadapters 1 entsprechend den Ausführungen zu Figur 1 ausgebildet sein.

## Patentansprüche

1. Fahrradadapter zum Koppeln eines Fahrradzubehörteils an einen Fahrradgepäckträger mit
- einer an dem Fahrradzubehörteil anordbaren Aufnahmeeinheit (2),
- einer an der Aufnahmeeinheit (2) angeordneten Positioniervorrichtung (3), die im montierten Zustand des Fahrradadapters (1) am Fahrradgepäckträger eine Bewegung des Fahrradadapters (1) in eine Längsachsenrichtung verhindert, und
- einer an der Aufnahmeeinheit (2) angeordneten Riegeleinheit (6), die in Längsachsenrichtung zwischen einer Freigabeposition und einer Verriegelungsposition bewegbar ist, wobei sie in der Verriegelungsposition eine Bewegung des am Fahrradgepäckträger montierten Fahrradadapters (1) senkrecht zur Längsachsenrichtung verhindert.

2. Fahrradadapter nach Anspruch 1, **dadurch gekennzeichnet, dass** die Riegeleinheit (6) eine Riegelaufnahme (7) mit einem zwischen der Freigabeposition und einer Verriegelungsposition in der Riegelaufnahme (7) bewegbaren Riegel (8) aufweist.

3. Fahrradadapter nach Anspruch 1 oder 2, **dadurch gekennzeichnet, dass** die Riegeleinheit (6) eine Feder (10) aufweist, die derart angeordnet ist, dass der Riegel (8) gegen die Kraft der Feder (10) von der Verriegelungsposition in die Freigabeposition bewegbar ist.

4. Fahrradadapter nach einem der vorherigen Ansprüche, **dadurch gekennzeichnet, dass** am Riegel (8) ein Riegelstab (11) angeordnet ist.

5. Fahrradadapter nach einem der vorherigen Ansprüche, **dadurch gekennzeichnet, dass** die Positioniervorrichtung (3) mindestens zwei Positionierelemente (4a, 4b) aufweist, die insbesondere in Längsachsenrichtung des Fahrradadapters (1) beabstandet zueinander angeordnet sind.

6. Fahrradadapter nach einem der vorherigen Ansprüche, **dadurch gekennzeichnet, dass** eine zum Eingriff mit dem Fahrradgepäckträger ausgebildete Fixiervorrichtung (14) an der Aufnahmeeinheit (2) angeordnet ist, die derart ausgebildet und angeordnet ist, dass eine sich in Eingriff befindliche Fixiervorrichtung (14) eine Bewegung des Fahrradadapters (1) am Fahrradgepäckträger quer zur Längsachse des Fahrradadapters (1) zumindest weitestgehend verhindert.

7. Fahrradadapter nach einem der vorherigen Ansprüche, **dadurch gekennzeichnet, dass** die Riegeleinheit (6) zumindest teilweise als Positioniervorrichtung (3) und/oder Fixiervorrichtung (14) ausgebildet ist.

8. Fahrradadapter nach einem der vorherigen Ansprüche, **dadurch gekennzeichnet, dass** die Fixiervorrichtung (14) mindestens zwei Fixierelemente (15a - 15d) aufweist.

9. Fahrradadapter nach einem der vorherigen Ansprüche, **dadurch gekennzeichnet, dass** die Riegeleinheit (6), die Positioniervorrichtung (3) und/oder die Fixiervorrichtung (14) derart angeordnet und ausgebildet sind, dass der Fahrradadapter (1) zur senkrechten Montage auf den Fahrradgepäckträger ausgebildet ist.
